# EUROPÄISCHE PATENTSCHRIFT

(11) **EP 2 094 461 B1**
(45) Veröffentlichungstag und Bekanntmachung des Hinweises auf die Patenterteilung: **01.02.2012**
(21) Anmeldenummer: 07846593.7
(22) Anmeldetag: 15.11.2007
(51) Int. Cl.: B29B 17/00, B29B 17/02

(54) **VERFAHREN FÜR DAS RECYCLING ALLER ABFALLKUNSTSTOFFE INSBESONDERE MISCHKUNSTSTOFF**
METHOD FOR RECYCLING ALL WASTE PLASTICS IN PARTICULAR MIXED PLASTICS
PROCÉDÉ POUR RECYCLER TOUT TYPE DE DÉCHETS DE MATIÈRES PLASTIQUES, EN PARTICULIER UN MÉLANGE DE MATIÈRES PLASTIQUES

(30) Priorität: 17.11.2006 DE 102006054769; 17.11.2006 DE 102006054770
(43) Veröffentlichungstag der Anmeldung: 02.09.2009
(73) Patentinhaber: CVP Clean Value Plastics GmbH, 21614 Buxtehude (DE)
(72) Erfinder: HOFMANN, Michael, 21614 Buxtehude (DE); GERCKE, Alexander, 23843 Bad Oldesloe (DE)
(74) Vertreter: Hauck Patent- und Rechtsanwälte
(86) Internationale Anmeldenummer: PCT/EP2007/009864
(87) Internationale Veröffentlichungsnummer: WO 2008/058730

(56) Entgegenhaltungen:
- EP-A- 1 518 652
- WO-A-2006/100044
- DE-A1- 2 457 701
- JP-A- 11 028 375
- JP-A- 2005 066 511
- US-A- 6 140 378

## Beschreibung

Die Erfindung bezieht sich auf ein Verfahren für das Recycling aller Arten von Abfallkunststoff, insbesondere Mischkunststoff (MKS) nach dem Patentanspruch 1.

Aus WO 2006/100044 ist ein Verfahren zur Zerkleinerung und Reinigung von Abfallkunststoff, insbesondere Mischkunststoff, bekannt geworden, bei dem aus Folienschnipseln oder sonstigen Folienresten und zerhackten Kunststoffteilen ein Kompaktat bzw. ein Agglomerat hergestellt wird. Das Agglomerat reduziert drastisch das Volumen des Abfallkunststoffs und kann daher leicht transportiert werden. Es wird in diesem Zustand in großem Umfang für die Energieerzeugung eingesetzt. Dabei verbleiben ein großer Anteil an Verschmutzungen, Störstoffen und Anhaftungen im Agglomerat/Kompaktat. In dem bekannten Verfahren wird von der Erkenntnis ausgegangen, daß sich ein derartiges Kompaktat bzw. Agglomerat gut vermahlen läßt und zur Weiterbehandlung und Veredelung geeignet ist. Die Vermahlung geschieht vorzugsweise in einem Scheiben- oder Trommelrefiner in Anwesenheit von Wasser. Von dem aus dem Refiner austretenden Mahlgut wird eine Feinkornfraktion entfernt. Das übrige Mahlgut wird gewaschen bzw. mechanisch entwässert und getrocknet. Durch weitere Aufbereitung kann ein derartiges Mahlgut als Ersatz für Holz in Holzwerkstoffplatten, als Füllstoff bei den verschiedensten Anwendungen und bei entsprechendem Reinigungsgrad auch mit Reinkunststoff oder hochwertigen sortierten Recyclingkunststoffen zur Herstellung von Kunststoffteilen verwendet werden. Ein weiteres Anwendungsgebiet ist die Herstellung von sogenannten WPC-Teilen (Wood Plastic Composites). Bei der Herstellung derartiger Teile wird eine Mischung aus Holz- und Kunststoffpartikeln entweder durch Trockenmischung und direkte Verarbeitung oder durch Compoundierung mit Hilfe eines Extruders, eines Agglomerators, eines Heizmischers oder eines Heizkühlmischers hergestellt und zu Formteilen verarbeitet.

Abfallkunststoff enthält naturgemäß einen nicht unbeträchtlichen Anteil an Zellstoff, der für viele Anwendungszwecke unbrauchbar ist. Dieser Zellstoff hat seine Herkunft in Klebeetiketten, aus Verbundverpackungen oder aus unvollständigen Abtrennungen von freien Papier. Bei Kunstoffen aus Altpapiersammlungen haften häufig größere Mengen an Zellstoff an den Kunststoffen. Bei der Kompaktierung ist der Zellstoff eingeschmolzen bzw. verkapselt und gelangt dadurch in den Mahlprozeß.

Bei diesen Materialien unter dem Oberbegriff Kompaktat muss unterschieden werden zwischen Agglomerat, das aus einem Scheiben-, Ringmatrizen- oder Topfagglomerator stammt, und Pellets, die über Siebmatrizenverfahren hergestellt werden. Beide Verfahren kompaktieren bzw. agglomerieren das Material in einem Trockenprozess und erzeugen einen dreidimsionalen Verbund von Kunststoffteilchen in einer definierten Korngröße.

Die Unterschiede zwischen den o. g. Agglomerierverfahren und den Pelletierverfahren sind, dass bei den Agglomerierverfahren ein teilweises oder sogar vollständiges Aufschmelzen des Kunststoffes erfolgt, während bei den Pelletierverfahren über Siebmatrizen keine Verschmelzung oder nur eine leichte Anschmelzung am Rand erfolgt. Ein weiterer Unterschied ist, dass bei den Siebmatrizenpellets v. a. bei Folienherkunft der Kunststoffe eine Schichtung der Kunststoffe in Lagen erfolgt, was bei den Agglomeraten nicht der Fall ist.

Der wichtigste Unterschied ist jedoch zu finden bei den oben erwähnten Verschmutzungen und Anhaftungen. Bei Agglomeraten wird ein großer Teil der Anhaftungen, insbesondere Zellstoff und Verschmutzungen eingeschmolzen. Bei Siebmatrizen-Pellets geschieht zwar eine teilweise Einkapselung, jedoch keine Einschmelzung da es nicht zu einer Durchschmelzung des Materials kommt.

Siebmatrizenpellets sind allerdings mit dem in WO 2006/100044 beschriebenen Verfahren nur unbefriedigend aufmahlbar, da es leicht zur Auslösung von einzelnen Folienflakes kommt, die bekanntlich in dem dort beschrieben Verfahren nicht vollständig oder überhaupt nicht zerkleinert werden. Nur wenn die dreidimensionale Verformung einzelner Folienflakes in den Siebmatrizenpellets ausreichend stark ist, kommt es zu einem befriedigenden Mahlergebnis. Bei Agglomerat, dass angeschmolzen oder durchgeschmolzen ist, kommt es nach WO 2006/100044 immer zu einem ausgezeichneten Mahlergebnis, wobei trotzdem zweidimensionale Flakes, die nicht im Agglomerat eingebunden aber nicht aufgeschmolzen sind, nicht optimal zerkleinert werden.

Wird Kunststoff zusammen mit Zellstoff in einem Extruder verarbeitet oder in einer Spritzgießmaschine, führt die Feuchtigkeit des Zellstoffs zu Wasserdampfentwicklung, welche eine Verarbeitung erschwert oder gar unmöglich macht. Zellstoff im aufgemahlenen Kunststoff hat außerdem den Nachteil, daß er hygroskopisch wirkend Feuchtigkeit anzieht und diese während eines Trocknungsprozesses gegebenenfalls länger hält als im Kunststoffmaterial.

Der Erfindung liegt die Aufgabe zugrunde, ein Verfahren für das Recycling von Abfallkunststoff, insbesondere Mischkunststoff, anzugeben, mit dem die Wiederverwendungsmöglichkeit des aufbereiteten Abfallkunststoffs verbessert und insbesondere die Trennung von Anhaftungen und/oder Zellstoff aus dem Abfallkunststoff erleichtert wird.

Diese Aufgabe wird durch die Merkmale des Patentanspruchs 1 gelöst.

Bei dem erfindungsgemäßen Verfahren erfolgt die Aufmahlung des Agglomerats/Kompaktats, in mindestens einer Refinerstufe, die einen sogenannten Zahnscheibenrefiner enthält. Beim Zahnscheibenrefmer sind die Scheiben mit ineinandergreifenden Zähnen versehen, die beabstandet auf konzentrischen Kreisen angeordnet sind. Erfindungsgemäß ist die Lückenbreite zwischen den Zähnen eines Kreises größer als das jeweils bis dahin gemahlene Korn. Da die Aufmahlung des Agglomerats/Kompaktats von innen nach außen geschieht und eine mehr oder weniger kontinuierliche Zerkleinerung von innen nach außen erfolgt, ist naturgemäß das Korn radial außen deutlich geringer als im Bereich der Einfüllöffnung in der Achse des Refiners. Dementsprechend kann der Abstand der Zähne auf den Kreisen und der Abstand der Mahlscheiben von innen nach außen kleiner werden. Der genannte Abstand ist jedoch sehr wichtig, weil trotz der Anwesenheit von Wasser sonst die Gefahr besteht, daß sich das stückige nicht geschmolzene Gut zwischen den Zähnen des Refiners festsetzt und diesen binnen kurzem verstopft.

Zahnscheibenrefiner sind an sich bekannt. Sie werden zum Dispergieren von Zellstoff verwendet, wie es etwa bei der Aufbereitung von Altpapier anfällt. Der Zellstoff wird in einer Suspension in den Zahnscheibenrefiner gegeben, wobei das Material zunächst in einer sogenannten Walkzone im Einlaufbereich bearbeitet wird, bevor es den Zahnreihen zuströmt. Zum Aufmahlen von Material, insbesondere von Kompaktat oder Agglomerat sind Zahnscheibenrefiner bisher nicht eingesetzt worden. Zahnscheibenrefiner sollen bei ihrem bisherigen Einsatzzweck Papierfasern vereinzeln und nicht mahlen. Die Fasern sollen bei der Dispergierung so wenig wie möglich geschädigt werden.

Die Aufmahlung des Agglomerats/Kompaktats mit Hilfe eines Zahnscheibenrefiners hat mehrere Vorteile. So ist es möglich, ein relativ homogenes Korngemisch zu erhalten, das sich später einfacher verarbeiten, insbesondere veredeln läßt. Ein weiterer Vorteil beim Einsatz eines Zahnscheibenrefiners ist der, daß eine sehr feine Aufmahlung möglich ist, auch bei relativ zähen Kunststoffen, die dazu führt, daß man in einem späteren Verfahrensschritt Zellstoff und Kunststoff leichter voneinander trennen kann.

Bei relativ lose zusammenhängendem Kompaktat, z.B. Pellets aus Matrizenpressungen, wird mit dem Zahnscheibenrefiner auf wirksame Weise unmittelbar der Zellstoff aus den Pellets gelöst und liegt dann getrennt vom gemahlenen Kunststoff vor und kann dann relativ leicht separiert werden.

Besonders wirkungsvoll ist ein Zahnscheibenrefiner bei Kunststoffen, die sich durch höhere Schmelztemperaturen in Verbindung mit höheren Steifigkeiten schwer kompaktieren lassen oder die sich mangels Verbindungsfähigkeit zu anderen Kunststoffen in gemischten Kunststofffraktion nur schwer Kompaktieren lassen. Beispiele für solche Kunststoffe sind PET, PP oder HDPE. In dem Verfahren nach WO 2006/100044 werden Flakes oder Schnipsel aus diesen oder diesen ähnlichen Kunststoffen nur unzureichend oder gar nicht aufgemahlen, wenn diese nicht im Agglomerat/Kompaktat eingebunden waren oder das Kompaktat sich zu früh vereinzelt hat wie dieses sehr leicht bei Siebmatrizenpellets der Fall sein kann.

Refinerscheiben nach WO 2006/100044 neigen zu starken Verschleißerscheinungen an den Bereichen, in denen die Barrieren im Kanal zwischen den Stegen angeordnet sind, da dort das Mahlgut konzentriert der Mahlzone zugeführt wird und es somit Punkte einer sehr hohen Mahlintensität gibt. Die Mahlintensität einer Zahnscheibe kann wesentlich besser als bei der in WO 2006/100044 beschriebenen Refinerscheibe eingestellt werden, was zu einer erheblichen Verbesserung des Mahlergebnisses und zu einer Verringerung des Verschleißes an den Mahlscheiben führt. Die Mahlintensität und somit der Grad der Feinmahlung kann bei einem Zahnscheibenrefiner über die Anzahl der Zahnreihen, sowie den Abstand der Zahnkreise untereinander eingestellt werden, so dass für verschiedene Mahlgüter die Zahnscheibe optimiert werden kann und die Bereiche hoher Mahlintensität gleichmäßiger sind als bei einer Scheiben nach WO 2006/100044.

Aus dem beschriebenen Stand der Technik ist bekannt, das Aufmahlen des Agglomerats in zwei aufeinanderfolgenden Refinerstufen vorzusehen. Bei dem erfindungsgemäßen Verfahren kann die eine oder auch beide Refinerstufen einen Zahnscheibenrefiner enthalten zum Aufmahlen des Agglomerats bzw. Kompaktats. Das Mahlgut aus dem Zahnscheibenrefiner wird nach einer weiteren Ausgestaltung der Erfindung vorzugsweise unmittelbar mechanisch entwässert. Die mechanische Entwässerung kann zum Beispiel mit Hilfe einer Zentrifuge erfolgen. Mit dem abgeschiedenen Wasser können Feinstanteile entfernt werden, die für den weiteren Prozeß nicht benötigt bzw. verwendet werden können.

Eine erfindungsgemäße Zahnscheibenrefinerstufe kann auch im Anschluß an einen üblichen Messerscheibenrefiner zum Zerkleinern von Agglomerat/Kompaktat angeordnet werden. In diesem Fall wird das mechanisch entwässerte oder getrocknete Mahlgut der ersten Scheibenrefinerstufe in einen Behälter mit Wasser eingetragen, aus dem es dann mittels einer Pumpe oder einer Stopfschnecke in den Zahnscheibenrefiner eingetragen wird. Das bei der mechanischen Entwässerung anfallende Prozeßwasser kann wahlweise einer Abwasserbehandlung unterzogen oder in den Eingang des Zahnscheibenrefiners rückgeführt werden.

Es wurde bereits erwähnt, daß mit Hilfe eines Zahnscheibenrefiners eine besonders gute Aufmahlung des Agglomerats/Kompaktats ermöglicht wird bei gleichzeitiger Trennung von aufgemahlenem bzw. zerfasertem Zellstoff und Kunststoffkorn. In diesem Zusammenhang sieht eine Ausgestaltung der Erfindung vor, daß das mechanisch entwässerte und getrocknete Mahlgut einer Windsichtung unterworfen wird, bei der eine körnige Kunststofffraktion und eine Zellstoff/Kunststoffeinkornfraktion getrennt werden. Die nahezu zellstofffreie Kunststofffraktion kann als Halbprodukt für den weiteren Einsatz auf den verschiedensten Anwendungsgebieten verwendet werden. Die Zellstoff/Kunststoffeinkornfraktion läßt sich ebenfalls verwenden, worauf weiter unten noch eingegangen wird. Die Trocknung des entwässerten Mahlguts kann nach einer Ausgestaltung der Erfindung mit Hilfe eines Wirbelschichttrockners oder eines Flugschichttrockners erfolgen. Derartige Trockner sind an sich bekannt. Die Zellstoff/Kunststoffeinkornfraktion wird vorzugsweise in einem Sieb oder einem Filter aufgefangen. Vorzugsweise wird nach einer weiteren Ausgestaltung der Erfindung die Filter-/ oder Siebfraktion in einem weiteren Lufttrockner, zum Beispiel Flugschichttrockner nachgetrocknet. Diese Maßnahme kann insofern wichtig sein, als in der ersten Trocknungsstufe der Kunststoff bereits trocken ist, während der Zellstoff, der eine längere Trocknungszeit erfordert, noch feucht ist.

Eine Trennung von gemahlenem Kunststoff und Zellstoff kann auch im Naßprozeß erfolgen, z.B. durch Siebung, Schwimmsinksichtung, Sortierzentrifuge oder Unterdrucksiebung. Letzteres ist das Hindurchsaugen der Zellstoffsuspension durch ein Sieb mittels Unterdruck. Schließlich kann auch eine Siebvorrichtung nach US 2004/0050510 A1 verwendet werden, wobei jedoch der Kunststoff das Akzept bildet, während der Zellstoff durch das Trommelsieb hindurchtritt.

Entscheidend beim erfindungsgemäßen Verfahren ist, daß durch entsprechende Aufmahlung des Agglomerats/Kompaktats und z.B. anschließende Trocknung des Mahlguts durch Windsichtung während des Trocknens eine Trennung von einer Kunststofffraktion nahezu ohne Zellstoff einerseits von einer Zellstoff/Kunststofffraktion andererseits ermöglicht wird. Der Wasseranteil des Filterguts läßt sich dabei über folgende Parameter steuern. Ein Parameter ist das Strömungsvolumen der Luft, die zum Trocknen eingesetzt wird. Ein weiterer Parameter ist der Ort, in dem ein geregeltes Luftvolumen in das Mahlgut eingeführt bzw. aus diesem herausgetragen wird. Am Anfang des Trocknungsverlaufes ist es schwieriger, den Zellstoff über Windsichtung abzuscheiden, da der Zellstoff langsamer austrocknet als Kunststoff. Vorzugsweise erfolgreich ist die Abscheidung zum Ende des Trocknungsverlaufes, wenn auch der Zellstoff die angestrebte Trockenheit erreicht hat. Schließlich ist der Mahlgrad des Materials und dort insbesondere die Korngrößenverteilung innerhalb der Siebkurve von Bedeutung. Bei Material mit wenigen Unterschieden in den Korngrößen hängt die Abtrennung des Zellstoffs im wesentlichen von dem Gewicht der einzelnen Körner und von dem Luftwiderstand ab. Bei einer Verteilung der Korngrößen zum Beispiel in Form einer Gauß'schen Glockenkurve wird tendentiell eher der feine Anteil zusammen mit dem Zellstoff abgeschieden und das gröbere Korn geht in die Kunststofffraktion. Diesen Effekt kann man sich weiter zunutze machen. Feine Kunststoffe, vor allem von polyolefiner Herkunft ergeben zusammen mit Zellstoff einen sehr gut nutzbaren Werkstoff für die Herstellung sogenannter Wood-Plastic-Composites (WPC). Das Kunststoffasergemisch wird zum Beispiel über einen Agglomerator in Granulatform gebracht oder direkt auf einen Doppelbandkalander gestreut. Eine andere Möglichkeit ist die Kompoundierung zum Beispiel in einem Spezialextruder mit Entgasungsvorrichtung und gegebenenfalls Zugabe von Additiven, wie zum Beispiel Maleinsäureanhydrit. Auch Reinkunststoffe virginer Herkunft, Reaktorware oder hochwertige Kunststoffe aus der Kunststoffartensortierung können beigemischt werden, um gezielte Verarbeitungsqualitäten zu erzeugen. In jedem Fall wird für diese Anwendung eine Faservergütung der Kunststoffe erzeugt, so daß die Beimischung von Holzspänen und -fasern reduzierbar oder sogar verzichtbar ist. Damit entfällt für die Herstellung von WPC die Aufbereitung von Holzspänen oder -fasern, was zu großen wirtschaftlichen Einsparungen führt. Der weitere wirtschaftliche Effekt liegt auf dem Entsorgungssektor, bei dem sonst hohe Kosten für die Entsorgung des Zellstoffs anfallen.

Der Anteil des Kunststoffs in der Filter- oder Siebfraktion kann erhöht werden, wenn der Luftstrom im Trockner erhöht wird. Ansonsten muß eine Erhöhung des Kunststoffanteils bei Herstellung eines WPC-Compound durch Zugabe von gemahlenem Kunststoff erfolgen.

Die Anwendung einer herkömmlichen Zahnscheibe, wie er bekannterweise zum Dispergieren eingesetzt wird, ist bei der Erfindung grundsätzlich möglich. Aus Gründen der Optimierung sollte er modifiziert werden, z.B. um die Mahlintensität zu verbessern. Er bedarf gewisser Modifikationen, wie sich bereits aus den obigen Angaben ableiten läßt. In einer Ausgestaltung der Erfindung hierzu ist von der zentralen Zuführöffnung ausgehend die erste Zahnreihe in einem radialen Abstand zur Zuführöffnung angeordnet und bildet eine vorzugsweise flache Einlaufzone. In einer anderen Ausgestaltung der Erfindung ist vorgesehen, daß ein Zahnscheibenrefiner verwendet wird, bei dem der Abstand der Scheibenflächen von der zentralen Zuführöffnung ausgehend radial nach außen kontinuierlich abnimmt. Der Abstand der Scheiben an der Zuführöffnung ist so eingestellt, daß das Material ohne zu stocken zwischen die Zahnscheiben eintreten kann. Nach einer anderen Ausgestaltung der Erfindung kann ein Zahnscheibenrefiner verwendet werden, bei dem der radiale äußere Bereich der Scheiben radiale oder annähernd radiale in Drehrichtung beabstandete Rippen aufweist, wie sie Messerscheibenrefiner, wie sie auch zum Aufmahlen von Kunststoffagglomerat bekannt geworden sind, aufweisen. In diesem Zusammenhang können die Mahlrippen mit Barrieren versehen werden derart, daß die zermahlen Körner zur benachbarten Scheibe hin gelenkt werden.

Schließlich kann ein Zahnscheibenrefiner verwendet werden, bei dem die Zahnscheiben von der mittigen Zuführung ausgehend im Umfangsabstand Kanäle eingeformt sind, die sich über eine gewisse Strecke nach außen erstrecken. Die Kanäle, die in ihrer Tiefe von innen nach außen abnehmen können, sind in jedem Falle so breit, daß sie den Eintritt des Kompaktats ermöglichen.

Die Erfindung wird nachfolgend anhand von Zeichnungen näher erläutert.
- Fig. 1: zeigt ein Anlagenschema zum Aufbereiten von agglomeriertem Mischkunststoff in zwei aufeinanderfolgenden Refinerstufen.
- Fig. 2: zeigt eine Refinerstufe mit einem Zahnscheibenrefiner nach der Erfindung als Vorstufe vor einem bereits bekannten Aufbereitungsprozeß von Kunststoffaggomerat.
- Fig. 3: zeigt die gleiche Refinerstufe nach Fig. 2 im Anschluß an einen herkömmlichen Aufmahlprozeß für Kunststoffagglomerat.
- Fig. 4: zeigt eine ähnliche Darstellung wie Fig. 3 mit einer geringfügigen Abwandlung.
- Fig. 5: zeigt die Draufsicht auf eine Scheibe eines Zahnscheibenrefiners zur Anwendung bei der Erfindung.
- Fig. 6: zeigt eine Abwandlung der Zahnscheibe nach Fig. 5.
- Fig. 7: zeigt perspektivisch die Zahnscheibe nach Fig. 6.
- Fig. 8: zeigt schematisch das Trocknen und Windsichten am Ende des Aufmahlprozesses von Kunststoffagglomerat.

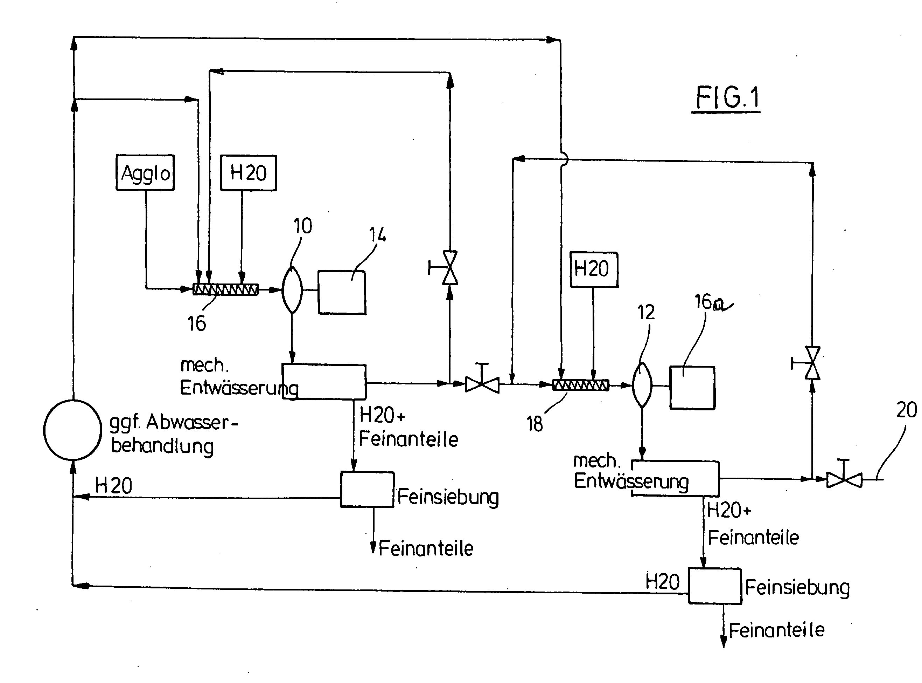

In Fig. 1 sind ein erster Refiner 10 und ein zweiter Refiner 12 dargestellt, die jeweils von einem Antriebsmotor 14 bzw. 16a angetrieben sind. Die Refiner 10, 12 sind sogenannte Zahnscheibenrefiner, wie sie im Anschluß noch detaillierter beschrieben werden. Aus einem nicht gezeigten Reservoir wird Kunststoffagglomerat bzw. -kompaktat, das zuvor aus Kunststoffflakes und ähnlichen sortierten Kunststoffabfällen hergestellt worden ist, was an sich bekannt ist, einer Förderschnecke 16 zugeführt, in die auch Wasser eingeleitet wird. Die Suspension aus Wasser und Kunststoffagglomerat bzw. -kompaktat wird in den Zahnscheibenrefiner 10 eingetragen. Das körnige Mahlgut wird in einer mechanischen Entwässerung entwässert, beispielsweise mit Hilfe einer Zentrifuge. Prozeßwasser mit Feinanteilen gelangt in eine Feinsiebung, in der die Feinanteile vom Prozeßwasser abgetrennt werden. Die Feinanteile haben eine Korngröße von 0,25 mm oder 0,5 mm oder weniger. Das Prozeßwasser gelangt zu einer Abwasserbehandlung und von dort zurück in die Förderschnecke 16. Das entwässerte gemahlene Gut gelangt in eine weitere Förderschnecke 18 zusammen mit zugeführtem Prozeßwasser. Der Förderschnecke 18 wird gegebenenfalls auch frisches Wasser zugeführt Im zweiten Refiner wird das Mahlgut weiter aufgemahlen und in einer mechanischen Entwässerung, beispielsweise einer Zentrifuge, vom Prozeßwasser und Feinanteilen separiert. Das Prozeßwasser kann, nachdem wiederum Feinanteile abgetrennt worden sind, einer Abwasserbehandlung zugeführt werden. Das entwässerte Mahlgut gelangt von dem Ausgang der in Fig. 1 gezeigten Stufe, wie bei 20 angegeben, zu einer Trocknungsstufe.

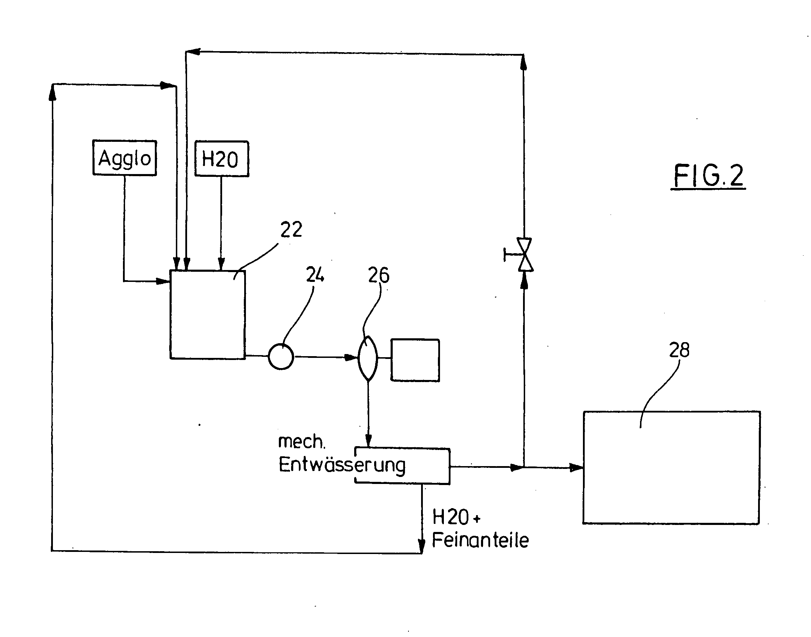

Das Mahlgut aus dem Refiner 10 kann auch unmittelbar auf seinen Eingang bzw. die Förderschnecke 16 rückgeführt werden, z.B. in einem Volumenanteil von 30 %. Eine Rückführung kann für jede Refinerstufe vorgesehen werden, wie sie z.B. auch in den Fig. 2 bis 4 dargestellt sind.

Bei der Ausführungsform nach Fig. 2 wird Kunststoffagglomerat bzw. - kompaktat zusammen mit Wasser in einen Behälter 22 eingetragen, wobei der Feststoffanteil mindestens 10 % beträgt. Über eine Feststoffpumpe 24 wird diese Mischung in einen Zahnscheibenrefiner 26 eingebracht. Das Mahlgut wird mechanisch entwässert, zum Beispiel mit Hilfe einer Zentrifuge. Das Prozeßwasser mit Feinanteilen kann in den Behälter 22 zurückgeführt werden.

Wahlweise können die Feinanteile auch abgesiebt werden. Das entwässerte Mahlgut gelangt zu einer weiteren Bearbeitungsstufe 28, beispielsweise einer solchen, wie sie in WO 2006/100044 ausführlich beschrieben worden ist.

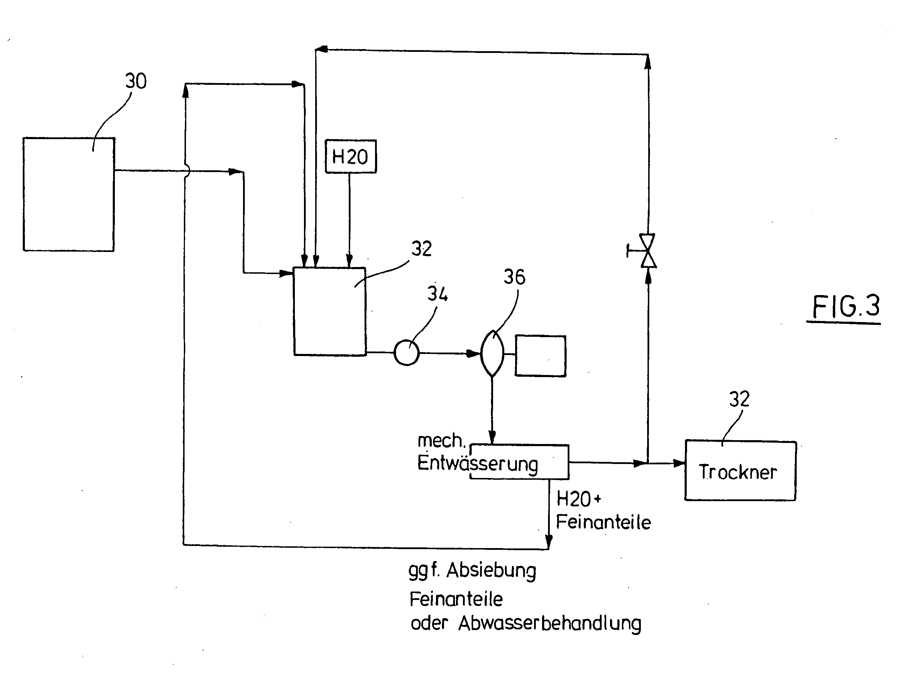

Bei der Ausführungsform nach Fig. 3 wird in einem Trockner 30 Mahlgut getrocknet, das zum Beispiel mit einem Scheibenrefiner hergestellt wird. Der Trockner 30 kann dabei umgangen werden, wodurch das entwässerte Mahlgut der vorausgehenden Refinerstufe unmittelbar dem Behälter 32 zugeführt wird. Das Gut wird in den Behälter 32 mit Prozeßwasser eingetragen, wobei wiederum der Feststoffgehalt mindestens 10 % beträgt. Über eine Feststoffpumpe 34 wird die Mischung in einen Zahnscheibenrefiner 36 eingetragen, in dem eine Aufmahlung zu noch feinkörnigerem Gut erfolgt. Das Mahlgut wird mechanisch entwässert und einem Trockner 32 zugeführt. Prozeßwasser mit Feinanteilen, die gegebenenfalls abgetrennt werden, kann einer Abwasserbehandlung zugeführt werden oder zurück in den Behälter 32.

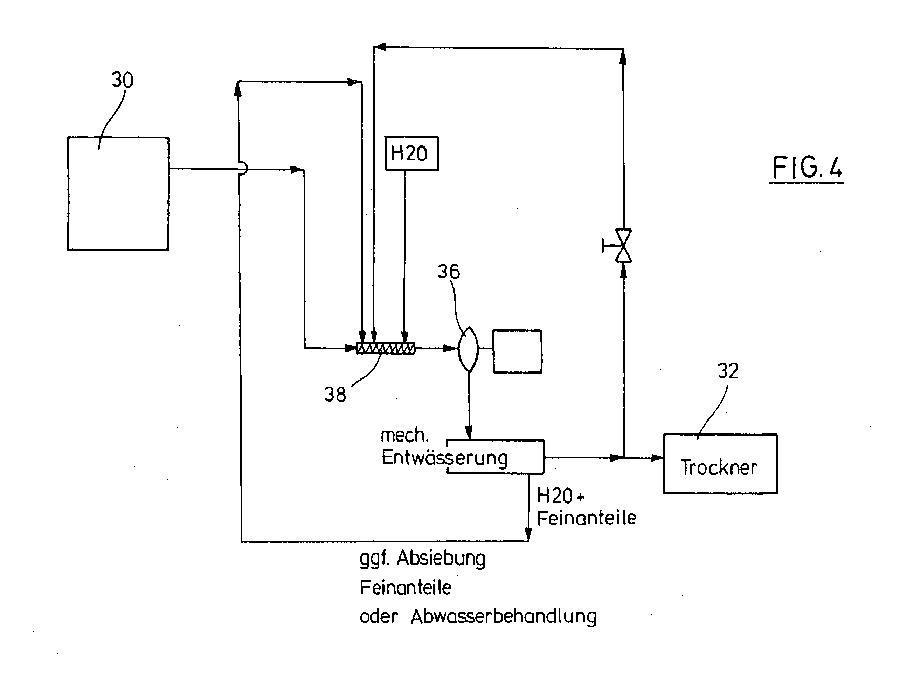

Die Ausführungsform nach Fig. 4 unterscheidet sich von der nach Fig. 3 nur dadurch, daß kein Wasserbehälter 32 verwendet wird, sondern das Gut zusammen mit Prozeßwasser in eine Förderschnecke 38 eingegeben wird.

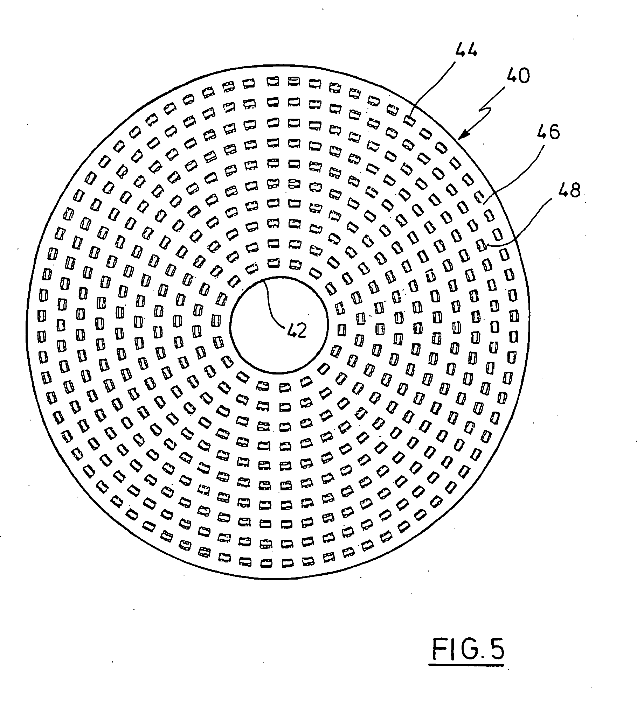

In Fig. 5 ist die Draufsicht auf eine Scheibe 40 eines Zahnscheibenrefiners dargestellt, wie er zur Vermahlung von Agglomerat/Kompaktat verwendet werden kann. Im vorliegenden Fall ist es diejenige Scheibe eines Zahnscheibenpaars, über dessen mittige Öffnung 42 zu zerkleinerndes Gut herangeführt wird. Auf der Scheibe 40 sind in zehn Kreisen, die zentrisch angeordnet sind, Zähne 44 geformt. Zwischen den Zähnen 44 ist die Scheibe 40 flach. Die Zähne, die unterschiedliche Formen haben können, haben auf einem Kreis jeweils einen Abstand 46, der im gezeigten Fall annähernd gleich ist, jedoch von innen nach außen abnehmen kann. Zwischen den Kreisen haben die Zähne einen Abstand 48. Auch dieser kann von innen nach außen kleiner werden. Beim Mahlprozeß gelangt Wasser und zu zerkleinerndes Gut, Kompaktat oder Agglomerat, über die Öffnung 42 in den Bereich zwischen zwei einander gegenüberliegenden Zahnscheiben, wobei die Zahnanordnung der zweiten Scheibe, die in Fig. 5 nicht gezeigt ist, so angeordnet ist, daß die Zahnreihen ineinander greifen können. Die Abstände 46, 48 und der Abstand zusammenwirkender Zahnscheiben ist so bemessen, daß das jeweilige zu mahlende Gut ungehindert hindurchtreten kann, so daß Verstopfungen vermieden werden. Aus diesem Grunde können die Abstände 46, 48 und auch der Abstand zwischen zusammenwirkenden Zahnscheiben von innen nach außen abnehmen, weil das Korn des Gutes von innen nach außen zerkleinert wird.

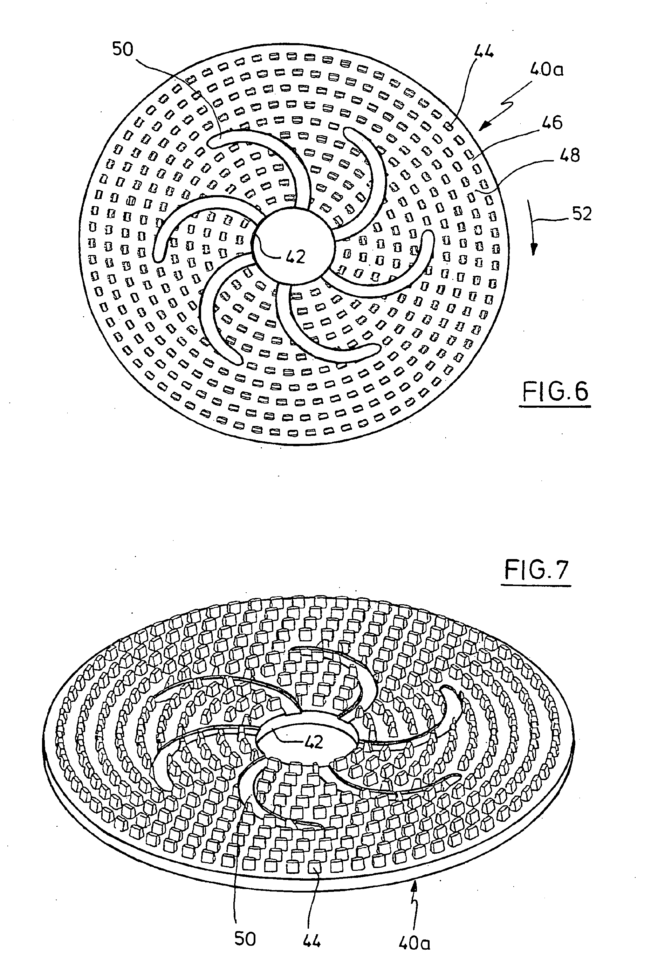

Die Zahnscheibe 40a nach Fig. 6 unterscheidet sich von der nach Fig. 5, daß ausgehend von der Zuführöffnung 42 etliche Kanäle 50 eingeformt sind. Die Kanäle haben annähernd Kreisbogenform, wobei die Krümmung derart ist, daß die Enden der Kanäle 50 entgegengesetzt der Drehrichtung zeigen, die mit dem Pfeil 52 angegeben ist. Die Kanäle 50 haben eine Breite, die geringfügig oder etwas größer ist als die Breite der größten Agglomerat-/Kompaktatteilchen, die über die Zuführöffnung 42 zugeführt werden. Ist hingegen nicht Agglomerat bzw. Kompaktat, sondern bereits ausgemahltes Agglomerat/Kompaktat das zu zerkleinernde Gut, ist die Breite der Kanäle 50 entsprechend geringer auszuführen. Die Kanäle 50 haben angrenzend an die Zuführöffnung 42 die größte Tiefe und nehmen in ihrer Tiefe allmählich ab, wobei am Ende sie in die Zahnscheibenfläche auslaufen.

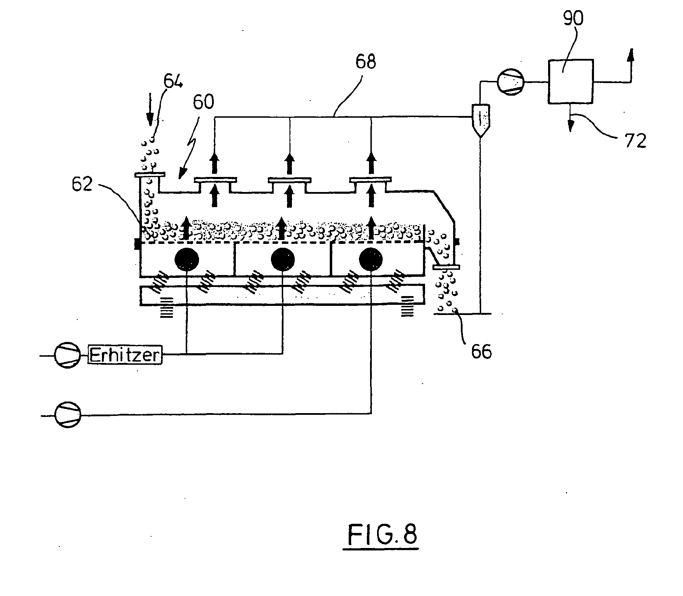

In Fig. 8 ist schematisch ein Wirbelschichttrockner dargestellt, wie er etwa am Anschluß 20 der Ausführungsform nach Fig. 1 oder für den Trockner 32 nach den Figuren 3 und 4 eingesetzt werden kann. Er ist insgesamt mit 60 bezeichnet. Das längliche Gehäuse ist in Längsrichtung durch ein Sieb oder Gitter 62 unterteilt, das das oben zugeführte Mahlgut 64 trägt. Unterhalb des Siebes 62 wird von einem Erhitzer kommend warme Luft zugeführt. Im letzten Drittel wird kalte Luft zugeführt. Das längliche Gehäuse wird in geeigneter Weise in Vibration versetzt, so daß das Gut als Bett auf dem Sieb 62 sich von links nach rechts vorbewegt. Ein derartiger Wirbelschichttrockner ist an sich bekannt. Das getrocknete Gut gelangt bei 66 am rechten Ende aus dem Gehäuse des Wirbelschichttrockners. Der gezeigte Trockner dient zugleich als Windsichter. Das Mahlgut 64 enthält körnigen Kunststoff und Zellstoff. Der Zellstoff wird zusammen mit gegebenenfalls noch anhaftenden sehr feinen Kunststoffkörnern über die Leitung 68 zu einem Sieb oder Filter 70 geleitet, wo Zellstoff und Kunststoff aufgefangen werden. Die Siebfraktion wird über 72 zu einer weiteren Verarbeitung geführt, gegebenenfalls nach einer weiteren Trocknung über einen Flugschichttrockner. Eine Weiterverarbeitung erfolgt zum Beispiel in der Erstellung von WPC-Formteilen. Das getrocknete reine Kunststoffmahlgut kann unmittelbar oder nach weiterer Sortierung, zum Beispiel nach Korngrößen, der weiteren Verarbeitung zugeführt werden.

## Patentansprüche

1. Verfahren für das Recycling aller Arten von Abfallkunststoff, insbesondere Mischkunststoff (MKS), bei dem Agglomerat oder Kompaktat, insbesondere Siebmatrizenpellets, aus Flakes oder sonstigen Kunststoffteilen in mindestens einer Refinerstufe in Anwesenheit von Wasser gemahlen, aus dem aus der Refinerstufe austretenden Mahlgut Feinanteile mit dem Prozeßwasser entfernt werden, das übrige Mahlgut gewaschen und/oder mechanisch entwässert und getrocknet oder das entwässerte Mahlgut erneut in Anwesenheit von Wasser in einer weiteren Refinerstufe aufgemahlen und anschließend entwässert und getrocknet wird, wobei die Aufmahlung des Kompaktats in mindestens einer Refinerstufe mit Hilfe eines Scheibenrefiners vorgenommen wird, **dadurch gekennzeichnet, dass** der Scheibenrefiner ein Zahnscheibenrefiner ist, dessen Scheiben ineinandergreifende Zähne aufweisen, die beabstandet auf konzentrischen Kreisen angeordnet sind, wobei zwischen benachbarten Zähnen eines Kreises eine Lücke besteht und die Lücken eines Kreises jeweils so groß sind, daß das zu mahlende bzw. das bis dahin ermahlene Korn frei hindurchtreten kann.

2. Verfahren nach Anspruch 1, **dadurch gekennzeichnet, daß** die Aufmahlung in zwei hintereinander angeordneten Refinerstufen und in der ersten und/oder der zweiten mit Hilfe eines Zahnscheibenrefiners erfolgt.

3. Verfahren nach Anspruch 1 oder 2, **dadurch gekennzeichnet, daß** das Mahlgut aus der Zahnscheibenrefinerstufe vor dem Trocknen mechanisch entwässert wird.

4. Verfahren nach einem der Ansprüche 1 bis 3, **dadurch gekennzeichnet, daß** mechanisch entwässertes oder getrocknetes Mahlgut einer zweiten Refinerstufe in einen Behälter mit Wasser eingetragen wird, aus dem es mittels einer Pumpe oder als entwässertes Material unter Zugabe von Wasser mit einer Stopfschnecke in einen Zahnscheibenrefiner eingeleitet wird.

5. Verfahren nach einem der Ansprüche 1 bis 4, **dadurch gekennzeichnet, daß** bei der mechanischen Entwässerung anfallende Feinanteile mit Prozeßwasser entweder einer Abwasserbehandlung unterworfen oder in den Eingang des Zahnscheibenrefiners rückgeführt wird.

6. Verfahren nach einem der Ansprüche 2 bis 5, **dadurch gekennzeichnet, daß** unmittelbar aus einem Zahnscheibenrefiner austretendes Mahlgut mechanisch entwässert und anschließend zu einer weiteren Refinerstufe geleitet, mit anschließender mechanischer Entwässerung und Trocknung des Mahlguts der zweiten Refinerstufe.

7. Verfahren nach einem der Ansprüche 1 bis 6, **dadurch gekennzeichnet, daß** die Aufmahlung in der ersten bzw. zweiten Refinerstufe derart fein ist, daß Kunststoff und Zellstoffteilchen eine Mischung getrennter Teilchen bilden und das mechanisch entwässerte und getrocknete Mahlgut einer Windsichtung unterworfen wird, bei der eine körnige Kunststofffraktion und eine Zellstoff/Kunststoffeinkornfraktion getrennt werden.

8. Verfahren nach Anspruch 7, **dadurch gekennzeichnet, daß** das entwässerte Mahlgut mit Hilfe eines Wirbelschichttrockners oder einer Flugschichttrockners getrocknet und die mit der Trocknungsluft abtransportierten Zellstoff/Kunststoffeinkornteilchen in einem Sieb oder einem Filter aufgefangen werden.

9. Verfahren nach Anspruch 7 oder 8, **dadurch gekennzeichnet, daß** durch Veränderung des Trockenluftstroms der Anteil der mitgerissenen Kunststoffkörner verändert wird.

10. Verfahren nach Anspruch 8 oder 9, **dadurch gekennzeichnet, daß** die Filter/ oder Siebfraktion in einem weiteren Lufttrockner, zum Beispiel Flugschichttrockner nachgetrocknet wird.

11. Verfahren nach einem der Ansprüche 1 bis 6, **dadurch gekennzeichnet, daß** die Aufmahlung derart fein ist, daß Kunststoff- und Zellstoffteilchen eine Mischung getrennter Teilchen bilden und die Mischung durch Siebung, Schwimmsinksichtung, Sortierzentrifuge oder Unterdrucksiebung in eine körnige Kunststofffraktion und eine Zellstoff/Kunststoffeinfraktion getrennt wird.

12. Verfahren nach einem der Ansprüche 1 bis 11, **dadurch gekennzeichnet, daß** bei Verwendung eines Zahnscheibenrefiners von der zentralen Zuführöffnung ausgehend der erste Zahnkreis zur Bildung einer Einlaufzone in einem radialen Abstand zur Zuführöffnung angeordnet ist.

13. Verfahren nach Anspruch 12, **dadurch gekennzeichnet, daß** die Scheibenfläche der Einlaufzone bis zum ersten Zahnkreis durchgehend flach ist.

14. Verfahren nach einem der Ansprüche 1 bis 13, **dadurch gekennzeichnet, daß** ein Zahnscheibenrefiner verwendet wird, bei dem der Abstand der Scheibenflächen von der zentralen Zuführöffnung ausgehend radial nach außen kontinuierlich abnimmt.

15. Verfahren nach einem der Ansprüche 1 bis 14, **dadurch gekennzeichnet, daß** ein Zahnscheibenrefiner verwendet wird, bei dem ein radial äußerer Bereich der Scheiben radiale oder annähernd radiale in Drehrichtung beabstandete Mahlrippen aufweist.

16. Verfahren nach Anspruch 15, **dadurch gekennzeichnet, daß** zwischen den Mahlrippen Barrieren angeordnet sind derart, daß die zermahlten Körner zur benachbarten Scheibe hin gelenkt werden.

17. Verfahren nach einem der Ansprüche 1 bis 16, **dadurch gekennzeichnet, daß** ein Zahnscheibenrefiner verwendet wird, bei dem in die Zahnscheiben von der mittleren Zuführöffnung ausgehend im Umfangsabstand der Zuführöffnung Kanäle eingeformt sind, die sich über eine gewisse Strecke nach außen erstrecken.

18. Verfahren nach Anspruch 17, **dadurch gekennzeichnet, daß** die Tiefe der Kanäle von innen nach außen abnimmt.

19. Verfahren nach Anspruch 17 oder 18, **dadurch gekennzeichnet, daß** die Kanäle bogenförmig sind, wobei das äußere Ende der bogenförmigen Kanäle entgegengesetzt zur Drehrichtung zeigt.

20. Verfahren nach einem der Ansprüche 1 bis 19, **dadurch gekennzeichnet, daß** das vom Zellstoff befreite Mahlgut nach Korngröße und/oder spezifischem Gewicht sortiert wird.

21. Verfahren nach Anspruch 20, **dadurch gekennzeichnet, daß** die Sortierung in einer Sortierzentrifuge oder einem Hydrozyklon erfolgt.

## Claims

1. A method for the recycling of all types of waste plastic, in particular mixed plastic (MP), in which agglomerate or compactate, in particular sieve mold pellets, from flakes or other plastic parts arc ground in at least one refiner stage in the presence of water, from the ground material emerging from the refiner stage fine particles are removed with the process water, the remaining ground material is washed and/or mechanically dehydrated and dried or the dehydrated ground material is again ground in another refiner stage in the presence of water and then dehydrated and dried, wherein the grinding of the compactate is performed in at least one refiner stage using a disk refiner, **characterized in that** the disk refiner is a toothed disk refiner, the disks of which comprise engaging teeth, which are arranged separated on concentric circles, wherein there is a gap between neighboring teeth of a circle and the gaps of a circle are each big enough that the particles to be ground or ground up to that point can pass through freely.

2. The method according to claim 1, **characterized in that** the grinding takes place in two subsequently arranged refiner stages and in the first and/or second a tooth disk refiner is used.

3. The method according to claim 1 or 2, **characterized in that** the ground material from the toothed disk refiner stage is mechanically dehydrated before drying.

4. The method according to one of claims 1 to 3, **characterized in that** mechanically dehydrated or dried ground material of a second refiner stage is added to a container with water, from which it is fed into a toothed disk refiner by means of a pump or as dehydrated material through addition of water with a screw conveyor.

5. The method according to one of claims 1 to 4, **characterized in that** fine particles accumulated during mechanical dehydration with process water either undergo waste water treatment or are fed back to the inlet of the toothed disk refiner.

6. The method according to one of claims 2 to 5, **characterized in that** gound material directly emerging from a toothed disk refiner is mechanically dehydrated and then fed to another refiner stage, with subsequent mechanical dehydration and drying of the ground material of the second refiner stage.

7. The method according to one of claims 1 to 6, **characterized in that** the grinding in the first or second refiner stage is so fine that plastic and pulp particles form a mixture of separated particles and the mechanically dehydrated and dried ground material undergoes an air separation, in which a grainy plastic fraction and a pulp/plastic fine-particle fraction are separated.

8. The method according to claim 7, **characterized in that** the dehydrated ground material is dried using a fluidized bed drier or a dispersion drier and the pulp/plastic fine-particle particles transported away with the drying air are caught in a sieve or a filter.

9. The method according to claim 7 or 8, **characterized in that** the portion of plastic particles carried away is changed by changing the dry air flow.

10. The method according to claim 8 or 9, **characterized in that** the filter or sieve fraction is dried subsequently in another air drier, for example a dispersion drier.

11. The method according to one of claims 1 to 6, **characterized in that** the grinding is so fine that plastic and pulp particles form a mixture of separated particles and the mixture is separated into a grainy plastic fraction and a pulp/plastic fine-particle fraction through sieving, sink-float separation, sorting centrifuge or low-pressure sieving.

12. The method according to one of claims I to 11, **characterized in that** when using a toothed disk refiner, starting from the central feed opening, the first tooth circle is arranged at a radial distance from the feed opening for the formation of an inlet zone.

13. The method according to claim 12, **characterized in that** the disk surface of the inlet zone is continuously flat until the first tooth circle.

14. The method according to one of claims 1 to 13, **characterized in that** a toothed disk refiner is used, in which the distance of the disk surfaces starting from the central feed opening continuously decreases radially outwards.

15. The method according to one of claims 1 to 14, **characterized in that** a toothed disk refiner is used, in which a radially outer area of the disks comprises radial or almost radial grinding ribs, separated in the direction of rotation.

16. The method according to claim 15, **characterized in that** barriers are arranged between the grinding ribs such that the ground particles are steered towards the neighboring disk.

17. The method according to one of claims 1 to 16, **characterized in that** a toothed disk refiner is used, in which, starting from the middle feed opening, channels arc formed into the toothed disks in circumferential distance of the feed in opening, which extend outwards for a certain distance.

18. The method according to claim 17, **characterized in that** the depth of the channels decreases from inside to outside.

19. The method according to claim 17 or 18, **characterized in that** the channels are curved, wherein the outer end of the curved channels points opposite the direction of rotation.

20. The method according to one of claims 1 to 19, **characterized in that** the ground material freed from the pulp is sorted by particle size and/or specific weight.

21. The method according to claim 20, **characterized in that** the sorting takes place in a sorting centrifuge or a hydrocyclone.

## Revendications

1. Procédé pour recycler tout type de déchets de matières plastiques, en particulier un mélange de matières plastiques, dans lequel un agglomérat ou un produit compacté, en particulier des pellets de matrices de presse, formés de flocons ou d'autres fragments de matière plastique, est broyé dans au moins un étage de raffineur en présence d'eau, des fractions de fines sont extraites, conjointement avec l'eau de processus, du produit broyé sortant de l'étage de raffineur, le produit broyé restant est lavé et/ou mécaniquement déshydraté et séché ou le produit broyé déshydraté est de nouveau broyé en présence d'eau dans un autre étage de raffineur et est ensuite déshydraté et séché. Le broyage du produit compacté est effectué dans au moins un étage de raffineur à l'aide d'un raffineur à disques, **caractérisé en ce que** le raffineur à disques est un raffineur à disques dentés, dont les disques présentent des dents engrenées qui sont disposées de manière espacée en cercles concentriques. Un interstice existe entre les dents adjacentes d'un cercle et chaque interstice d'un cercle est suffisamment grand pour permettre le libre passage des particules à broyer ou déjà broyées.

2. Procédé selon la revendication 1, **caractérisé en ce que** le broyage a lieu dans deux étages de raffineur consécutifs et dans le premier et/ou le second à l'aide d'un raffineur à disques dentés.

3. Procédé selon les revendications 1 ou 2, **caractérisé en ce que** le produit broyé provenant de l'étage de raffineur à disques dentés est déshydraté mécaniquement avant le séchage.

4. Procédé selon une des revendications 1 à 3, **caractérisé en ce que** le produit broyé mécaniquement déshydraté ou séché d'un second étage de raffineur est déposé dans un récipient contenant de l'eau, d'où il est introduit dans un raffineur à disques dentés à l'aide d'une pompe, ou comme matière déshydratée en ajoutant de l'eau avec une vis de gavage.

5. Procédé selon une des revendications 1 à 4, **caractérisé en ce que** les fractions de fines produites lors de la déshydratation mécanique sont soumises avec l'eau de processus à un traitement d'épuration ou sont reconduites à l'entrée du raffineur à disques dentés.

6. Procédé selon une des revendications 2 à 5, **caractérisé en ce que** le produit broyé sortant directement d'un raffineur à disques dentés est déshydraté mécaniquement et ensuite dirigé vers un autre étage de raffineur, avec déshydratation et séchage mécaniques consécutifs du produit broyé du second étage de raffineur.

7. procédé selon une des revendications 1 à 6, **caractérisé en ce que** le broyage dans le premier et/ou dans le second étage de raffineur est tellement fin que les particules de matières plastiques et de cellulose forment un mélange de particules séparées et le produit broyé déshydraté mécaniquement et séché est soumis à un criblage à l'air au cours duquel une fraction granuleuse de matières plastiques et une fraction fine de cellulose/matières plastiques sont séparées.

8. Procédé selon la revendication 7, **caractérisé en ce que** le produit broyé déshydraté est séché à l'aide d'un séchoir à lit fluidisé ou d'un séchoir à lit fluidisé pulsé et les particules fines de cellulose/matières plastiques évacuées avec l'air de séchage sont captées dans un tamis ou dans un filtre.

9. procédé selon les revendications 7 ou 8, **caractérisé en ce que** la part des particules de matières plastiques entraînées est modifiée par changement du courant d'air sec.

10. Procédé selon la revendication 8 ou 9, **caractérisé en ce que** la fraction de filtre et/ou de tamis est séchée définitivement dans un autre séchoir à air, par exemple un séchoir à lit fluidisé pulsé.

11. Procédé selon une des revendications 1 à 6, **caractérisé en ce que** le broyage est tellement fin que les particules de matières plastiques et de cellulose forment un mélange de particules séparées et le mélange est séparé par criblage, tamisage densimétrique en milieu liquide, centrifugeuse de triage ou criblage à dépression dans une fraction granuleuse de matières plastiques et une fraction fine de cellulose/matières plastiques.

12. Procédé selon une des revendications 1 à 11, **caractérisé en ce que**, lorsqu'un raffineur à disques dentés est utilisé en partant de l'ouverture d'amenée centrale, le premier cercle de dents est disposé à une distance radiale de l'ouverture d'amenée pour la formation d'une zone d'entrée.

13. Procédé selon la revendication 12, **caractérisé en ce que** la surface de disque de la zone d'entrée est plate en continu jusqu'au premier cercle de dents.

14. Procédé selon une des revendications 1 à 13, **caractérisé en ce qu'**un raffineur à disques dentés est utilisé, dans lequel la distance des surfaces de disques depuis l'ouverture d'amenée centrale décroît radialement continuellement vers l'extérieur.

15. Procédé selon une des revendications 1 à 14, **caractérisé en ce qu'**un raffineur à disques dentés est utilisé, dans lequel une zone radialement externe des disques présente des nervures de broyage espacées radialement ou pratiquement radialement dans le sens de rotation.

16. Procédé selon la revendication 15, **caractérisé en ce que** des barrières sont agencées entre les nervures de broyage de telle manière que les particules broyées sont dirigées vers le disque adjacent.

17. Procédé selon une des revendications 1 à 16, **caractérisé en ce qu'**un raffineur à disques dentés est utilisé, dans lequel les disques dentés en partant de l'ouverture d'amenée intermédiaire comportent à distance périphérique de l'ouverture d'amenée des canaux qui s'étendent sur une certaine distance vers l'extérieur.

18. Procédé selon la revendication 17, **caractérisé en ce que** la profondeur des canaux décroît de l'intérieur vers l'extérieur.

19. Procédé selon les revendications 17 ou 18, **caractérisé en ce que** les canaux sont en forme d'arc, l'extrémité extérieure des canaux en forme d'arc pointant à l'opposé du sens de rotation.

20. Procédé selon une des revendications 1 à 19, **caractérisé en ce que** le produit broyé libéré de la cellulose est trié selon la granulométrie et/ou le poids spécifique.

21. Procédé selon la revendication 20, **caractérisé en ce que** le tri est effectué dans une centrifugeuse de triage ou dans un hydrocyclone.
